# DEMANDE DE BREVET EUROPEEN

(11) **EP 2 019 294 A1**
(43) Date de publication de la demande: **28.01.2009**
(21) Numéro de dépôt: 07301284.1
(22) Date de dépôt: 27.07.2007
(51) Int. Cl.: G01F 1/58, G01F 15/14

(54) **Compteur statique de fluide**

(71) Demandeur: Actaris SAS, 92100 Boulogne-Billancourt (FR)
(72) Inventeur: Cros, Alain, 71680 CRECHES SUR SAONE (FR); Mercier, Alcide, 71000 MACON (FR)
(74) Mandataire: Lenne, Laurence

(57) **Abrégé**

L'invention concerne un compteur statique de fluide comportant un capteur de débit comprenant un ensemble de pièces fixes de mesure.

Selon l'invention, il comporte :
- un tube de mesure (1) dont une ouverture (1A) sert à l'entrée du fluide et l'autre ouverture (1B) à la sortie du fluide, contenant intérieurement un premier ensemble desdites pièces de mesure et supportant extérieurement un second ensemble desdites pièces de mesure, et
- un carter externe (3) dans lequel est introduit et fixé de façon étanche ledit tube de mesure (1) et contenant au moins des pièces de traitement des données dudit capteur et un afficheur (A).

## Description

L'invention concerne un compteur statique de fluide, en particulier d'eau.

Elle se rapporte par exemple à un compteur de fluide à capteur magnétique comportant deux électrodes soumises à un champ magnétique alternatif, les électrodes comprenant un métal et un composant ionique de ce métal interposé entre le métal et le fluide, tel que décrit dans le document de brevet WO 2004/090475.

Si ce document antérieur décrit l'agencement général d'un tel capteur, il ne donne aucune indication quant à la constitution d'un compteur de fluide équipé d'un tel capteur.

L'objet de l'invention est de proposer un compteur de fluide statique, qui soit de montage particulièrement simple et ergonomique.

Par compteur statique, il est entendu un compteur sans pièces mobiles pour la mesure du débit. Cela englobe les compteurs à capteur magnétique, les compteurs à ultra son et les compteurs fluidiques dits également à jet vibrant.

L'invention propose donc un compteur statique de fluide comportant un capteur de débit comprenant un ensemble de pièces fixes de mesure, caractérisé en ce qu'il comporte :
- un tube de mesure dont une ouverture sert à l'entrée du fluide et l'autre ouverture à la sortie du fluide, contenant intérieurement un premier ensemble desdites pièces de mesure et supportant extérieurement un second ensemble desdites pièces de mesure, et
- un carter externe dans lequel est introduit et fixé de façon étanche ledit tube de mesure et contenant au moins des pièces de traitement des données dudit capteur et un afficheur.

Grâce à cette séparation en deux modules de montage, tube de mesure et carter, les différentes pièces de mesure peuvent être montées aisément dans et sur le tube de mesure, avec un accès facile aux emplacements de montage de ces pièces.

La connexion des pièces de mesure aux pièces de traitement des données est également aisée une fois le tube de mesure mis en place dans le carter.

Un montage simple et sécurisé, étape après étape, de toutes les pièces du compteur est ainsi possible.

De plus, le choix du matériau de ces deux modules peut être optimisé en ce qui concerne les propriétés et le coût. Par exemple, le tube de mesure qui doit résister à des pressions de fluide peut être réalisé en une matière plastique de forte résistance par exemple, du « Grivory » et avec une épaisseur et une conception générale correspondantes. Le carter externe qui n'est soumis à aucun effort particulier peut être en matériau plastique courant, par exemple de l'ABS, du PC ou de l'ABS/PC. Ces deux modules peuvent également avoir un aspect différent, par exemple une couleur différente.

Selon un mode de réalisation préféré, ledit tube de mesure comporte dans sa paroi au moins un orifice dans lequel est introduite par emboîtage et fixée une dite pièce du premier ensemble.

De préférence, ledit tube de mesure comporte sur sa paroi au moins un tenon sur lequel est fixée par emboîtage une dite pièce du second ensemble.

Avantageusement, un capot de protection est disposé autour dudit second ensemble de pièces.

De préférence, ledit carter est constitué d'un boîtier pourvu latéralement de deux orifices de passage dudit tube de mesure et de fixation étanche de brides correspondantes agencées sur ledit tube de mesure.

Ledit carter peut être pourvu d'un couvercle qui peut être transparent pour la lecture de l'index.

L'invention concerne plus précisément un compteur statique de fluide comportant un capteur de débit magnétique et tel que précisé ci-dessus,
caractérisé en ce que ledit premier ensemble desdites pièces de mesure compose de deux électrodes.

De préférence, ledit second ensemble desdites pièces de mesure se compose de deux bobines électromagnétiques.

Lesdites pièces de traitement des données peuvent comporter une plaque de circuit imprimé et une batterie.

De préférence, ledit tube de mesure et ledit carter sont en matière plastique.

L'invention est décrite ci-après plus en détail à l'aide de figures ne représentant qu'un mode de réalisation préféré de l'invention.

Les figures illustrent étape par étape le procédé de montage d'un compteur conforme à l'invention.

Les figures 1A, 2 à 4, 5A, 6, 7A, 8 à 13 ont des vues en perspective.

Les figures 1B, 5B et 7B sont des vues en coupe longitudinale des figures 1A, 5A et 7A.

Le compteur statique de fluide conforme à l'invention est ici un compteur à capteur magnétique du type décrit dans le document de brevet WO 2004/090475.

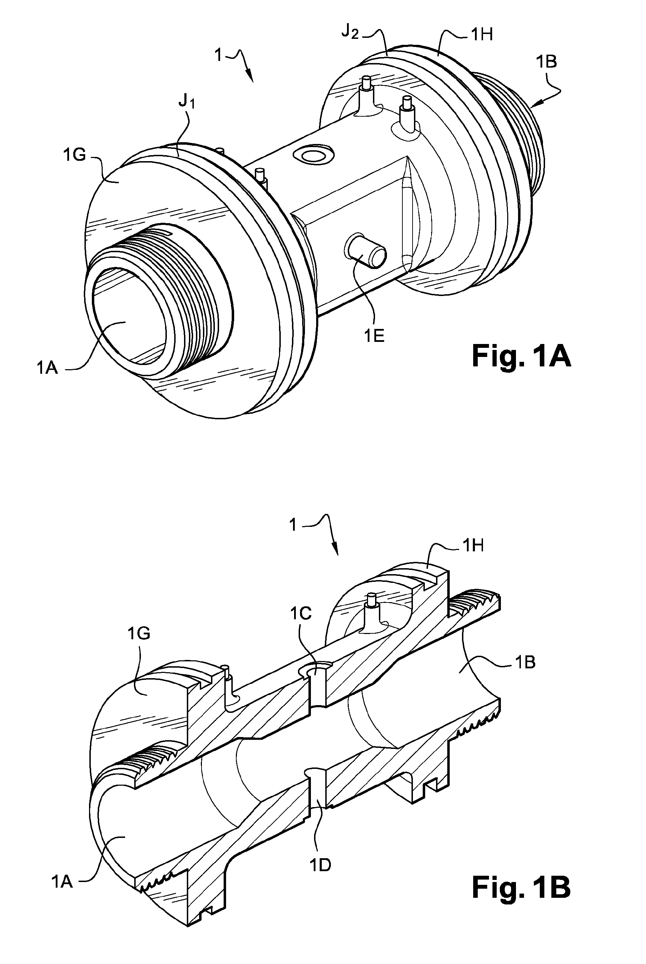

Il comporte tout d'abord un tube de mesure 1, avantageusement en matière plastique, représenté sur les figures 1A et 1B. Ce tube de mesure comporte une ouverture 1A servant à l'entrée du fluide et pourvue d'un filetage de connexion d'une conduite d'arrivée et une autre ouverture 1 B servant à la sortie du fluide et pourvue d'un filetage de connexion d'une conduite d'évacuation.

Ce tube de mesure est destiné à contenir intérieurement un premier ensemble des pièces de mesure, formé ici deux électrodes, et à supporter extérieurement un second ensemble de pièces de mesure, ici deux bobines électromagnétiques. Pour ce faire, il comporte dans sa paroi au moins un orifice 1C, 1D, dans lequel est introduite par emboîtage et fixée une pièce du premier ensemble, et sur sa paroi au moins un tenon 1E, 1F, sur lequel est fixée par emboîtage une pièce du second ensemble. Le tube de mesure 1 comprend également deux brides annulaires 1G, 1H pourvues chacune d'une rainure de réception d'un joint d'étanchéité J1, J2.

Selon le mode de réalisation ici décrit, le tube de mesure comporte deux orifices 1C, 1D diamétralement opposés et deux tenons 1E, 1F diamétralement opposés.

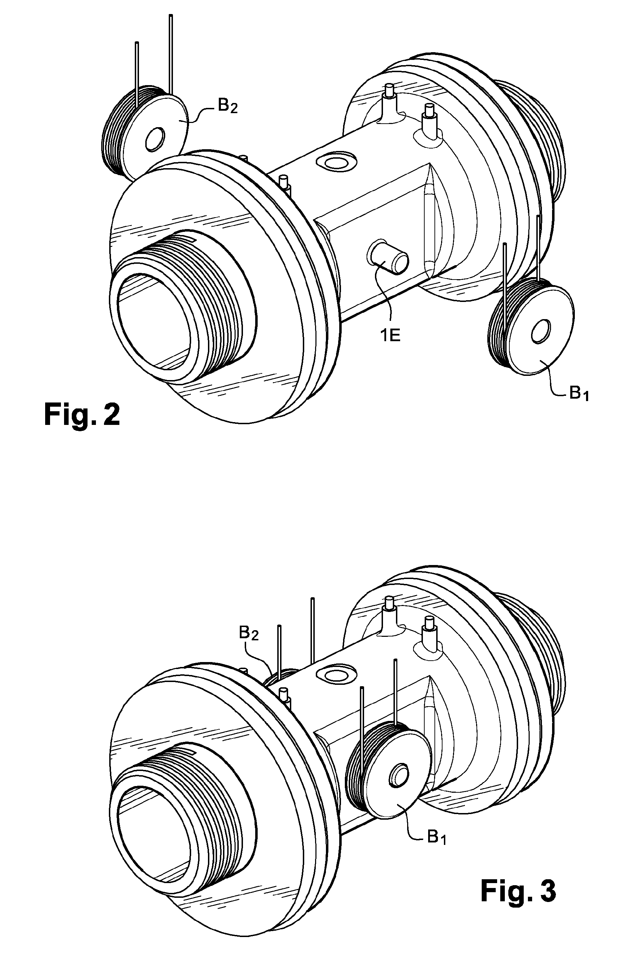

Comme illustré sur les figures 2 et 3, selon une première étape de montage, une bobine électromagnétique B1, B2 est emboîtée et fixée sur chaque tenon 1E, 1F

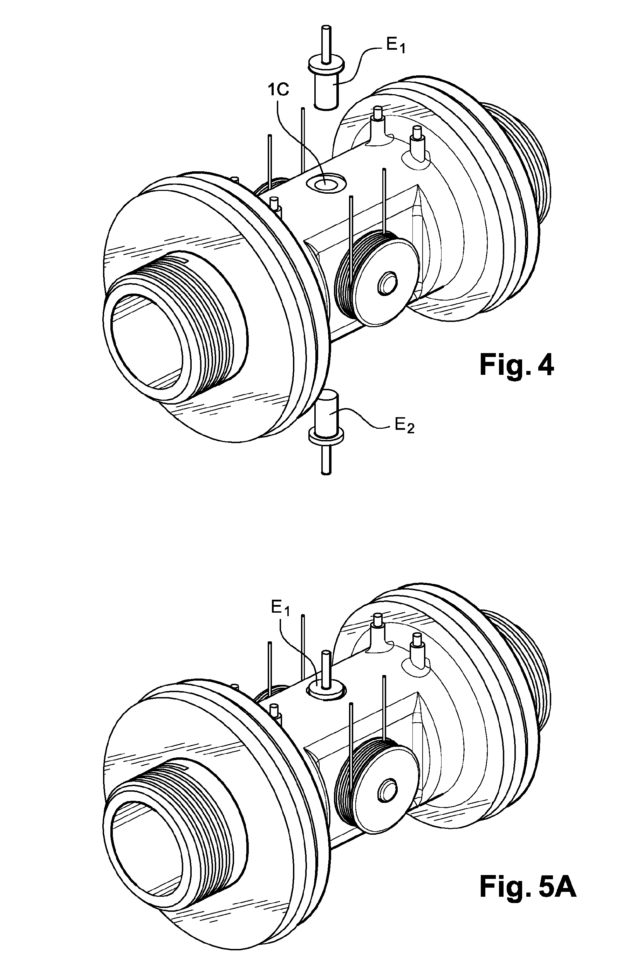

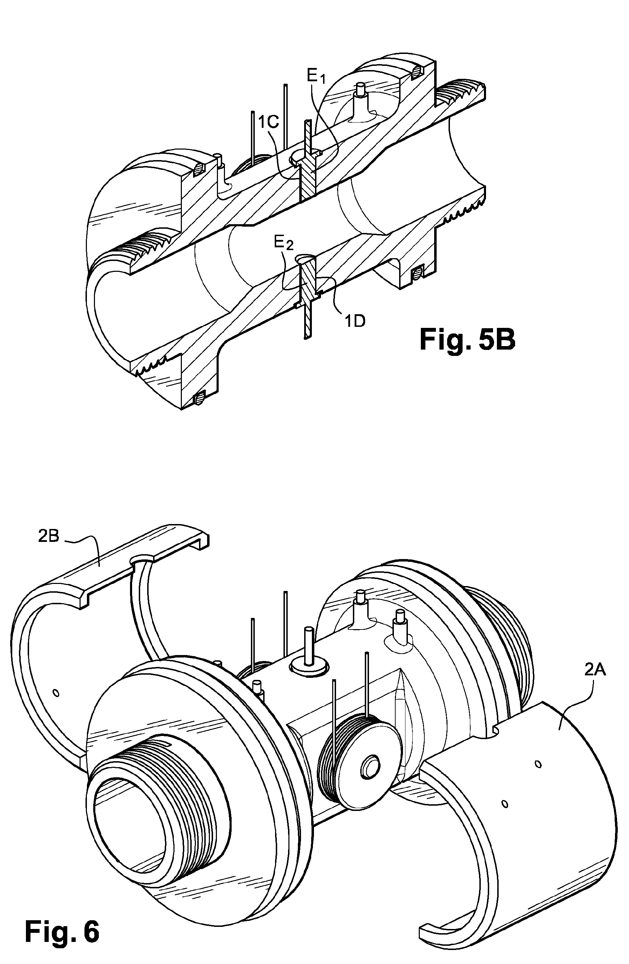

Comme illustré sur les figures 4, 5A et 5B, selon une étape de montage suivante ou simultanée, une électrode E1, E2 est introduite par emboîtage et fixée dans chaque orifice 1C, 1D. Pour ce faire, chaque électrode E1, E2 est introduite dans chaque orifice 1C, 1D afin de venir en contact avec le fluide, un épaulement venant en appui au fond du lamage de chaque orifice 1C, 1D et comporte un picot de connexion situé à l'extérieur du tube de mesure 1.

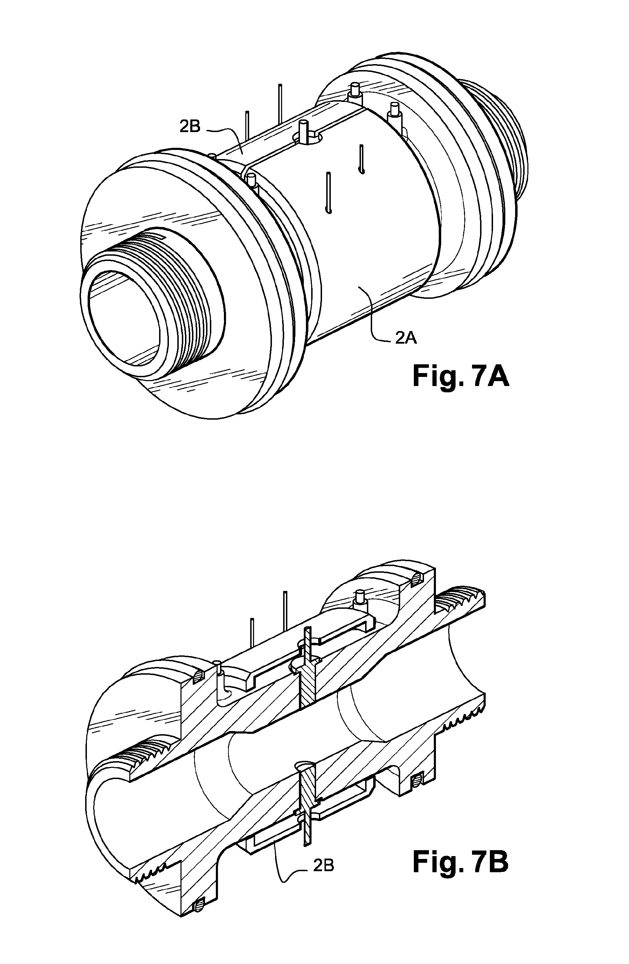

Comme illustré sur les figures 6 et 7, selon une étape de montage suivante, un capot de blindage est disposé autour des bobines B1, B2. Ce capot est conformé de deux demi pièces 2A, 2B formant une enveloppe cylindrique pourvues d'orifices de passages pour les picots de connexion des électrodes E1, E2 et des bobines B1, B2.

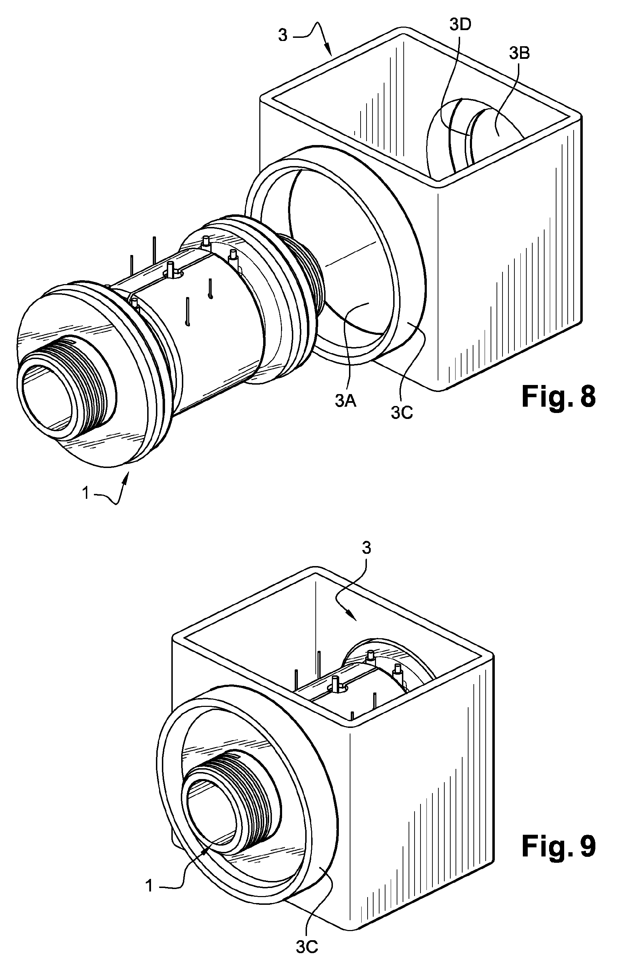

Comme illustré sur les figures 8 et 9, selon une étape de montage suivante, le tube de mesure 1 ainsi équipé est introduit dans un carter externe 3, avantageusement en matière plastique, dans lequel il est fixé de façon étanche et destiné à contenir au moins des pièces de traitement des données du capteur et un afficheur. Ce carter 3 est constitué d'un boîtier pourvu latéralement de deux orifices de passage 3A, 3B du tube de mesure et de fixation étanche des brides annulaires 1H, 1G équipées de leur joint J1, J2 venant en contact serré sur deux brides longitudinales 3C, 3D agencée autour de chaque orifice de passage 3A, 3B.

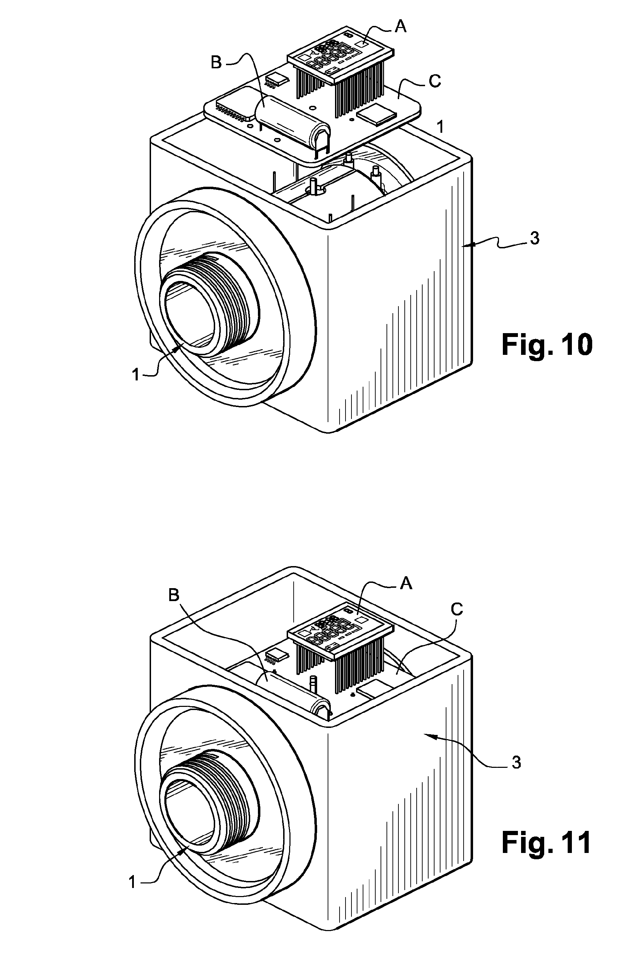

Comme illustré sur les figures 10 et 11, selon une étape de montage suivante, les pièces de traitement des données comportant une plaque de circuit imprimé C et une batterie B ainsi que l'afficheur A sont montés dans le carter 3 et les extrémités des picots de connexion des électrodes E1, E2 et des bobines B1, B2 sont connectées aux composants de la plaque de circuit imprimé C.

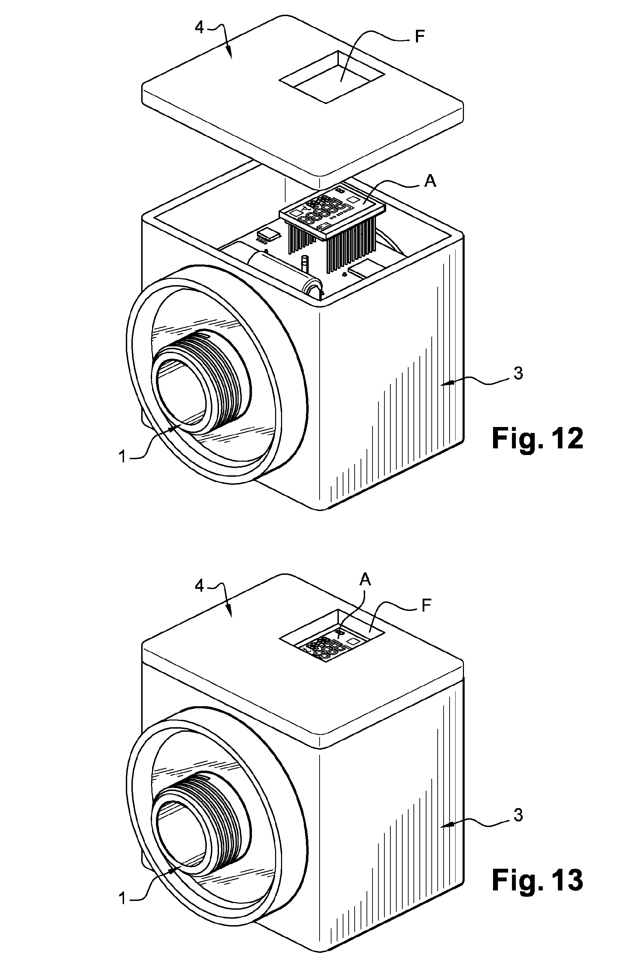

Comme illustré sur les figures 12 et 13, selon une étape de montage suivante, un couvercle 4 est monté sur le carter 3 afin de le fermer et comporte une fenêtre F de visualisation de l'afficheur A.

Selon ce mode de réalisation décrit, le compteur de fluide est un compteur à capteur de débit magnétique comportant deux électrodes et deux bobines électromagnétiques destinées à créer un champ magnétique alternatif auquel sont soumises les deux électrodes.

Mais le principe de l'invention qui est la séparation du compteur en deux modules de montage, à savoir le tube de mesure 1 et le carter 3, peut s'appliquer à tout type de compteur à éléments de mesure statique.

## Revendications

1. Compteur statique de fluide comportant un capteur de débit comprenant un ensemble de pièces fixes de mesure, **caractérisé en ce qu'**il comporte :
- un tube de mesure (1) dont une ouverture (1A) sert à l'entrée du fluide et l'autre ouverture (1B) à la sortie du fluide, contenant intérieurement un premier ensemble desdites pièces de mesure et supportant extérieurement un second ensemble desdites pièces de mesure, et
- un carter externe (3) dans lequel est introduit et fixé de façon étanche ledit tube de mesure (1) et contenant au moins des pièces de traitement des données dudit capteur et un afficheur (A).

2. Compteur selon la revendication précédente, **caractérisé en ce que** ledit tube de mesure (1) comporte dans sa paroi au moins un orifice (1C, 1 D) dans lequel est introduite par emboîtage et fixée une dite pièce du premier ensemble.

3. Compteur selon l'une des revendications précédentes, **caractérisé en ce qu'**un capot de blindage (2A, 2B) est disposé autour dudit second ensemble de pièces.

4. Compteur selon l'une des revendications précédentes, **caractérisé en ce que** ledit carter (3) est constitué d'un boîtier pourvu latéralement de deux orifices de passage (3A, 3B) dudit tube de mesure (1) et de fixation étanche de brides (1G, 1H) correspondantes agencées sur ledit tube de mesure.

5. Compteur selon la revendication précédente, **caractérisé en ce que** ledit carter (3) est pourvu d'un couvercle (4).

6. Compteur statique de fluide comportant un capteur de débit magnétique selon l'une des revendications précédentes, **caractérisé en ce que** ledit premier ensemble desdites pièces de mesure se compose de deux électrodes (E1, E2).

7. Compteur selon la revendication précédente, **caractérisé en ce que** ledit second ensemble desdites pièces de mesure se compose de deux bobines électromagnétiques (B1, B2).

8. Compteur selon l'une des revendications précédentes, **caractérisé en ce que** lesdites pièces de traitement des données comporte une plaque de circuit imprimé (C) et une batterie (B).

9. Compteur selon l'une des revendications précédentes, **caractérisé en ce que** ledit tube de mesure (1) et ledit carter (3) sont en matière plastique.
